# EUROPEAN PATENT APPLICATION

(11) **EP 3 050 613 A1**
(43) Date of publication of application: **03.08.2016**
(21) Application number: 14848620.2
(22) Date of filing: 24.09.2014
(51) Int. Cl.: B01D 71/48, B01D 39/16, D06M 15/27, D06M 15/507, D06M 101/32

(54) **FILTER MEMBRANE, FILTER UNIT, FILTER SYSTEM, AND FILTRATION METHOD**

(30) Priority: 25.09.2013 JP 2013198667
(71) Applicant: Sumitomo Electric Industries, Ltd., Osaka-shi, Osaka 541-0041 (JP)
(72) Inventor: UENO, Shinya, Osaka-shi Osaka 554-0024 (JP)
(74) Representative: Boult Wade Tennant
(86) International application number: PCT/JP2014/075291
(87) International publication number: WO 2015/046250

(57) **Abstract**

Provided is a filtration membrane for which a nonwoven fabric formed from synthetic fibers having hydrophilicity is used. The membrane is employed as a filtration membrane which can be used for a treatment system for seawater, river water, and the like and provides a high filtration flow velocity, sufficient recovery of the filtration flow velocity by backwashing or washing with a chemical, and a long lifetime. In particular, provided is a filtration membrane fabricated using a nonwoven fabric produced by hydrophilizing hydrophobic fibers by a material having a hydrophilic functional group, based on a method such as application of a hydrophilic resin to respective surfaces of hydrophobic resin fibers or copolymerization of a hydrophilic component. Also provided is a filtration unit and a filtration apparatus for which the filtration membrane is used, as well as a filtration method for filtrating seawater and/or freshwater by this filtration apparatus.

## Description

### TECHNICAL FIELD

The present invention relates to a filtration membrane used for filtration treatment of seawater, river water, and the like, a filtration unit for which the filtration membrane is used, as well as a filtration system (filtrate producing apparatus) and a filtration method using the filtration unit for producing filtrate.

### BACKGROUND ART

Various water treatment systems for detoxifying and draining seawater, river water and the like polluted by waste water and the like have been proposed (PTD 1 for example). Ballast water which is seawater for the sake of safe ship navigation may be taken on by ships, and various water treatment systems for preventing environmental pollution due to discharged ballast water have also been proposed (PTD 1, PTD 2, PTD 4, PTD 5 for example).

In such treatment systems, membrane filtration is widely done for removing suspended matter which is a solid included in water-to-be-treated and removing planktons and microorganisms such as bacteria. As filtration membranes used for membrane filtration, porous filtration membranes made of various materials have been proposed. For example, PTD 1 discloses a filtration apparatus including, as a filter (filtration membrane), a porous layer made of a material(s) selected from: polypropylene fiber; cellulose fiber and melamine resin; cellulose fiber and phenol resin; cellulose fiber and melamine resin and phenol resin; and cellulose fiber and acrylic fiber and phenol resin, and also describes that the filtration apparatus is further provided with a filtration apparatus located downstream of the former filtration apparatus and including a porous membrane made of polytetrafluoroethylene (PTFE, fluoropolymer). PTD 3 discloses a drawn membrane (porous membrane) of PTFE as a filtration membrane for efficiently removing from seawater a sticky substance (jelly-like suspended matter) called TEP (transparent exopolymer particles) secreted from cells of planktons or microorganisms.

A treatment system for river water, seawater, ballast water, and the like is often required to perform treatment at high speed. Therefore, a filtration membrane that enables high-flow-rate treatment is desired. Among the aforementioned materials, polyester such as polyethylene terephthalate is widely used as a material for a filtration membrane, since polyester is robust and facilitates fabrication of a filtration membrane enduring a filtration pressure resultant from a high flow rate. For example, PTD 4 (paragraph 0022) describes, regarding materials for a filtration membrane, "for example, while a porous structure such as drawn porous body, phase-separated porous body, or nonwoven fabric made of polyester, nylon, polyethylene, polypropylene, polyurethane, polytetrafluoroethylene (PTFE), polyvinylidene fluoride (PVdF) or the like is used, nonwoven fabric made of polyester such as polyethylene terephthalate is particularly suitably used for performing high-flow-rate treatment." PTD 5 (paragraph 0010, lines 5-7) describes that a relatively robust filter made of polyester or the like can be used as a filter for an apparatus treating ballast water for a ship, in order to remove suspended matter and remove microorganisms from seawater.

### CITATION LIST

### PATENT DOCUMENT

PTD 1: Japanese Patent Laying-Open No. 2010-119999
PTD 2: Japanese Patent Laying-Open No. 2011-251284
PTD 3: Japanese Patent Laying-Open No. 2012-196618
PTD 4: Japanese Patent Laying-Open No. 2012-245428
PTD 5: Japanese Patent No. 4835785

### SUMMARY OF INVENTION

### TECHNICAL PROBLEM

However, in the case where polyester such as polyethylene terephthalate is used for a filtration membrane, a problem is that pores in the filtration membrane cannot ensure a flow path sufficient for passing water-to-be-treated, to thereby hinder the filtration flow velocity. Although it is necessary to increase the treatment water pressure for increasing the filtration flow velocity, this is accompanied by a problem that the mechanical lifetime of the membrane shortens. This is applied as well to the above-illustrated membranes disclosed in PTD 1 and PTD 3 for example.

In the case of water treatment using a filtration membrane, the membrane is clogged with microorganisms such as plankton, floating matter, solid matter, and the like in water, the filtration flow velocity thus decreases with time, and finally filtration becomes difficult. While an attempt is made to recover the filtration flow velocity by performing backwashing or washing with a chemical, a problem remains that in the case of the conventional filtration membrane such as a filtration membrane made of polyester, recovery of the filtration flow velocity through backwashing or washing with a chemical is insufficient. In the case where a jet flow is increased for improving recovery of the filtration flow velocity through backwashing or washing with a chemical, the mechanical lifetime of the membrane is shortened. In the case where backwashing which is insufficient to recover the filtration flow velocity is repeated, finally clogging makes it difficult to recover the filtration flow velocity even when backwashing is performed. The conventional filtration membrane made of polyester has a problem that the time for which the membrane is used before recovery of the filtration flow velocity becomes difficult, namely the lifetime of the membrane, is short.

An object of the present invention is to provide a filtration membrane which is made of a porous body, can be used for a treatment system for seawater, river water, and the like, enables a high filtration flow velocity, provides sufficient recovery of the filtration flow velocity through backwashing or washing with a chemical, and has a long lifetime, as well as a filtration unit, a filtration system, and a filtration method capable of efficiently treating seawater, river water, and the like.

### SOLUTION TO PROBLEM

A first aspect of the present invention is a filtration membrane for which a nonwoven fabric formed from synthetic fibers having hydrophilicity is used.

A second aspect of the present invention is a filtration unit for which the filtration membrane of the first aspect is used.

A third aspect of the present invention is a filtration system for seawater and/or freshwater, including the filtration unit of the second aspect, a water feeding apparatus feeding water-to-be-treated through the filtration unit, and a washing apparatus washing the filtration unit.

A fourth aspect of the present invention is a method for filtrating seawater and/or freshwater, using the filtration apparatus of the third aspect.

### ADVANTAGEOUS EFFECTS OF INVENTION

According to the present invention, a filtration membrane which can be used for a treatment system for seawater, river water, and the like is provided. The filtration membrane enables a high filtration flow velocity (treatment speed), sufficient recovery of the filtration flow velocity through backwashing or washing with a chemical, and a long lifetime. By means of the filtration unit of the present invention as well as the filtration system and the filtration method using the filtration unit, treatment of seawater, river water, and the like and treatment of ballast water can be performed at a high filtration flow velocity, the filtration flow velocity can sufficiently be recovered by backwashing or washing with a chemical, and the frequency at which the filtration membrane used for them is exchanged can be decreased. Namely, efficient filtration and water treatment can be performed.

### BRIEF DESCRIPTION OF DRAWINGS

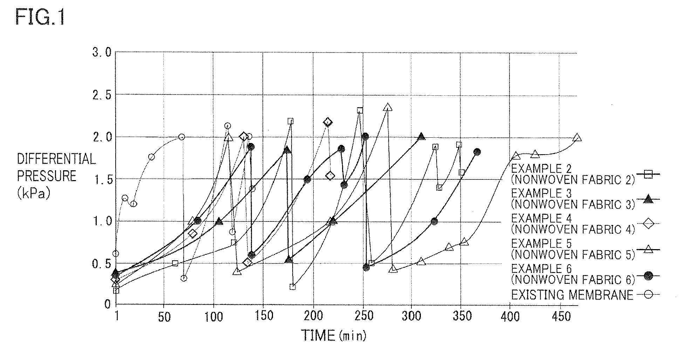

Fig. 1 is a diagram showing a relation between the differential pressure (treatment water pressure) and the filtration time when filtration is performed using filtration membranes of Examples of the present invention and Comparative Examples.

### DESCRIPTION OF EMBODIMENTS

The inventor of the present invention has conducted a thorough study to eventually find that a nonwoven fabric made from synthetic fibers having hydrophilicity, particularly polyester fibers having hydrophilicity can be used as a filtration membrane (filtration material) to improve the filtration flow rate (rate of flow which can be filtrated per unit time), make clogging less likely to occur, facilitate recovery of the filtration flow rate through backwashing, endure long-time use, and have a long lifetime. The inventor has thus completed the present invention.

The first aspect of the present invention is a filtration membrane for which a nonwoven fabric formed from synthetic fibers having hydrophilicity is used. Here, the synthetic fibers refer to chemical fibers made of a polymer produced through polymerization of organic molecules with a low molecular weight. Examples of the synthetic fibers having hydrophilicity include hydrophobic synthetic fibers chemically treated to thereby have hydrophilicity (hydrophilization treatment). They are for example polyester fibers, polypropylene fibers, and the like having been subjected to hydrophilization treatment.

The synthetic fibers having hydrophilicity refer to fibers as follows. When a nonwoven fabric is formed from the hydrophilic synthetic fibers and (one end of the fabric is) immersed in water, the water absorption speed of this fabric is at least six times as high as the water absorption speed of a nonwoven fabric formed from hydrophobic polyester fibers (polyethylene terephthalate fibers which has not been subjected to hydrophilization treatment) and (one end of the fabric is) immersed in water. In the case where a nonwoven fabric formed from synthetic fibers having hydrophilicity, particularly polyester fibers having hydrophilicity is used, water-to-be-treated easily permeates the nonwoven fabric and air bubbles retained in the nonwoven fabric are smoothly released. Therefore, a sufficient flow passage is ensured and the filtration flow velocity can be enhanced. Moreover, when the filtration membrane is washed through backwashing or washing with a chemical, the washing effect is improved to more sufficiently remove accretion, and the filtration flow velocity is sufficiently recovered. Therefore, clogging is less likely to occur.

The nonwoven fabric refers to a fabric made from fibers bonded together or intertwined by a thermal, mechanical or chemical action, and this fabric is a porous body having gaps (pores) between the fibers. The nonwoven fabric used for the present invention is selected or processed so that the selected or processed fabric has a porosity and a pore size appropriate for the use of filtration.

An example of the nonwoven fabric formed from polyester fibers having hydrophilicity is fibers produced by applying a hydrophilicity-imparting substance (hereinafter referred to as "hydrophilizing agent") to respective surfaces of hydrophobic polyester fibers to make the fibers hydrophilic. The polyester fibers having hydrophilicity also include polyester fibers modified by a raw material having a hydrophilic functional group such as sulfonyl group, carboxyl group, hydroxyl group, or the like, and fibers made from polyester and hydrophilic monomer which are copolymerized.

The fibers having hydrophilicity may also be cellulose, rayon, or the like. However, in order to enhance the filtration flow velocity for membrane filtration, the filtration membrane is required to have physical properties that can endure a water pressure of a high flow rate or the like. Generally a material having hydrophilicity such as cellulose, rayon, or the like is insufficient in terms of the physical properties that can endure a water pressure of a high flow rate or the like. In contrast, a filtration membrane obtained by applying a hydrophilic resin to respective surfaces of synthetic fibers, particularly polyester fibers which is engineering plastic, to thereby make the surfaces hydrophilic, has superior physical properties that can endure a water pressure of a high flow rate or the like, and is suitably used as a filtration membrane which is used for filtration of water of a high flow rate for membrane filtration. Moreover, by a method according to which hydrophobic synthetic fibers, particularly polyester fibers and a compound having a hydrophilic group are copolymerized, or a method according to which polyester fibers which are hydrophobic fibers are modified by a compound having a hydrophilic group, fibers having excellent physical properties enduring a water pressure of a high flow rate or the like while having hydrophilicity can be produced.

In view of the above, a preferred form of the first aspect of the present invention may be:
a form in which synthetic fibers having hydrophilicity are fibers produced by applying a hydrophilizing agent to respective surfaces of hydrophobic polyester fibers to make the fibers hydrophilic, and
a form in which synthetic fibers having hydrophilicity are a copolymer produced by copolymerizing polyester and a compound having a hydrophilic group.

Polyester fibers are preferred since they are robust and facilitate fabrication of a filtration membrane enduring a filtration pressure which accompanies a high flow rate. Among polyester fibers, particularly a condensate of diol and aromatic dicarboxylic acid such as polyethylene terephthalate, polybutylene terephthalate and the like is preferred.

The hydrophilizing agent applied to the surfaces of hydrophobic polyester fibers may for example be polyethylene glycol di(meth)acrylate, a block polymer of an acrylic polymer having polyester and a hydrophilic group, or the like. In particular, fibers produced by applying any of these hydrophilizing agents to respective surfaces of fibers of a polyester resin are more superior in water resistance and chemical resistance and therefore preferred.

Accordingly, a further preferred form of the first aspect may be a form in which the synthetic fibers having hydrophilicity are produced by applying a hydrophilizing agent to respective surfaces of fibers of a polyester resin, and the hydrophilizing agent is polyethylene glycol di(meta)acrylate and/or a block polymer of an acrylic polymer having saturated polyester and a hydrophilic group. Polyethylene glycol di(meta)acrylate has a degree of polymerization of preferably 30 or less, more preferably 2 to 23, and still more preferably 2 to 10. The saturated polyester which is a constituent component of the block copolymer of an acrylic polymer having saturated polyester and a hydrophilic group may be made up of a dibasic acid such as adipic acid, sebacic acid, and glycol such as diethylene glycol, triethylene glycol.

Application of the hydrophilizing agent may be done before fabrication of the nonwoven fabric from fibers, or after fabrication of the nonwoven fabric. Preferably the amount of the applied hydrophilizing agent is, in terms of the mass ratio, 0.5 to 5% by mass to the mass of the nonwoven fabric to which the hydrophilizing agent has been applied, since a nonwoven fabric suitable as the filtration membrane is obtained. An amount of the applied hydrophilizing agent of less than 0.5% by mass is not preferred, because the effects of enhancing the filtration flow rate and preventing clogging are not sufficient. Generally an amount of the applied hydrophilizing agent of more than 5% by mass is not preferred, because gaps in the nonwoven fabric are filled with the hydrophilizing agent, which may deteriorate the filtration performance.

A copolymer produced by copolymerization of polyester and a compound having a hydrophilic group is also preferred, since the copolymer has a mechanical strength derived from polyester to thereby enable a filtration membrane having a more excellent mechanical strength to be obtained.

Polyester is preferably saturated polyester, particularly a condensate of diol and aromatic dicarboxylic acid, such as polyethylene terephthalate, polybutylene terephthalate, or the like as described above. When polyester is synthesized by dehydration condensation of diol and dicarboxylic acid or polyester is synthesized by dehydration condensation of a compound having a hydroxyl group or a carboxylic group in a molecule, a condensation reaction is caused with coexistence of a compound having a hydrophilic group such as metal base of sulfonic acid, and accordingly a hydrophilic group can be introduced into a polymer to be produced and the aforementioned copolymer can be obtained.

As the compound having a hydrophilic group, preferably a compound having at least one kind of hydrophilic functional group selected from sulfonyl group, carboxyl group, and hydroxyl group is used. For example, a raw material for introducing a metal base of sulfonic acid (sulfone group) into polyester may be any of dibasic acids (which may be a condensable derivative thereof) having a metal base of sulfonic acid or polyalcohols having a metal base of sulfonic acid. Specifically, it may for example be a salt of sulfoisophthalic acid, sulfoterephthalic acid, sulfophthalic acid, 4-sulfo naphthalene-2,7-dicarboxylic acid (or a derivative thereof), and compounds represented by the following structural formulas (chemical formulas 1, 2).

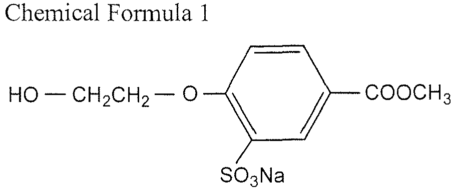

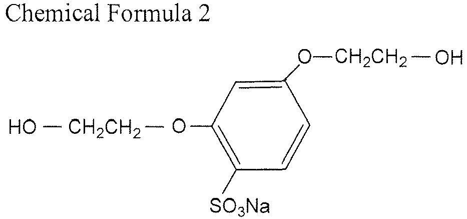

In the case where a metal base of sulfonic acid is introduced into polyester, the copolymerization ratio of a compound having a metal base of sulfonic acid with respect to the whole copolymer is preferably 0.1% to 20% by mass, and more preferably 0.5% by weight to 5% by mass. When it is more than 20 mol%, production of polyester is difficult. In contrast, when it is less than 0.1% by mass, sufficient hydrophilicity may not be obtained.

The nonwoven fabric can be obtained by forming fibers obtained in the above-described manner into a nonwoven fabric by a known method such as melt spinning, for example. A known nonwoven fabric made of hydrophobic polyester fibers may be hydrophilized in the above-described manner. The produced nonwoven fabric is processed to have a size and a shape appropriate for filtration and thereby form a filtration membrane. Specifically, depending on the use or the like of a filtration apparatus, the nonwoven fabric is processed to have an appropriate size and an appropriate shape such as a flat membrane, cylindrical membrane, for example, and processed into a pleated filter as required.

The second aspect of the present invention is a filtration unit for which the filtration membrane of the first aspect is used. In this second aspect, the above-described filtration membrane is used and therefore a filtration unit having a high filtration flow velocity can be provided. Further, since clogging is less likely to occur and the frequency at which the filtration membrane is washed is low, the filtration unit efficiently filtrates water. The filtration membrane of the first aspect is attached for example to a housing for feeding water-to-be treated, and a reinforcement material is provided as required so that deformation or breakage of the filtration membrane may not be caused by the fed water, and accordingly the filtration unit of the second aspect is produced. The filtration unit may be a cartridge-type filtration unit (filter cartridge) for example.

The third aspect of the present invention is a filtration system for seawater and/or freshwater, including the filtration unit of the second aspect, a water feeding apparatus feeding water-to-be-treated through the filtration unit, and a washing apparatus washing the filtration unit. In accordance with the third aspect, a filtration system that enables a high filtration flow velocity to be obtained and is capable of efficiently filtrating water can be provided. Further, the lifetime of the filtration membrane is improved and therefore the maintenance cost of the system can be reduced. Preferably, the filtration system further includes a controller for controlling operation of the water feeding means and the washing means. Thus, water-to-be treated is filtrated at a predetermined filtration flow velocity and a differential pressure (treatment water pressure) and the filtration unit is appropriately washed. Accordingly, the water can be filtrated efficiently and stably.

The fourth aspect of the present invention is a filtration method for seawater and/or freshwater using the filtration apparatus of the third aspect.

In accordance with the fourth aspect, the filtration apparatus in which the filtration flow velocity is high and clogging is less likely to occur is used. Therefore, a filtration method can be provided that is suitable for purification of both seawater and freshwater, specifically water of a large quantity which is likely to cause clogging due to TEP or the like, such as seawater like ballast water and freshwater like river water, lake water, or the like, industrial wastewater, and domestic wastewater.

### EXAMPLES

A hydrophilic nonwoven fabric 1 formed from polyester fibers having hydrophilicity by itself, and a hydrophilic nonwoven fabric 2 produced by applying a hydrophilic resin to hydrophobic polyester fibers to thereby make the fibers hydrophilic were fabricated, and hydrophilicity and performance of filtration based on a natural filtration system were evaluated.

### 1. Fabrication of Filtration Membrane (hydrophilic nonwoven fabric)

### (Example 1)

### (1) Synthesis of hydrophilic polyester resin (fibers of polyester copolymerized with hydrophilic monomer)

In a flask provided with a thermometer, a stirrer, an inert gas inlet, and a reflux cooler, a mixture of 166 parts by mass of terephthalic acid, 54 parts by mass of 5-sodium sulfoisophthalic acid, and 135 parts by mass of ethylene glycol was placed, and dehydration condensation was performed until the acid value became 1 or less at 220°C to thereby obtain a transesterification reaction product (oligomer).

Next, 0.02 parts by mass of an aqueous solution of 85% phosphoric acid was added to the transesterification reaction product, and they were thereafter transferred into a polycondensation reaction tank. Further, the reaction system was gradually decompressed while being heated to raise the temperature and, at a reduced pressure of 1 hPa, a polycondensation reaction was caused at 290°C in a usual way, to thereby obtain a polyethylene terephthalate resin containing a sodium sulfonate skeleton with an intrinsic viscosity of 0.65.

### (2) Fabrication of Nonwoven Fabric

By melt spinning in a usual way of this resin, spunbond-type hydrophilic nonwoven fabric 1 with a weight of 260 g/m² and a thickness of 0.6 mm was obtained.

### (Example 2)

### (1) Preparation of Hydrophilizing Agent (Resin)

625 parts by mass of polyester/acrylic block copolymer (manufactured by Takamatsu Oil & Fat Co., Ltd. under a trade name of PESRESIN A-647GEX), 4340 parts by mass of water, and 35 parts by mass of carbodiimide cross-linking agent (manufactured by Nisshinbo Chemical Inc. under a trade name of CARBODILITE SV-02) were placed in a water tank to thereby prepare a hydrophilizing agent.

### 2. Application of Hydrophilizing Agent (Hydrophilization)

Next, a spunbond-type polyester nonwoven fabric (manufactured by Toray Industries, Inc. under a trade name of AXTAR G2260-1 S BKO) with a weight of 260 g/m² and a thickness of 0.6 mm was immersed in the water tank, dried at 100°C for three minutes, and thereafter heat-treated at 170°C for one minute, to thereby thermally cure the polyester/acrylic block copolymer and obtain hydrophilic nonwoven fabric 2. The mass ratio of the polyester/acrylic block copolymer with respect to the hydrophilized nonwoven fabric was 5% by mass.

### 2. Evaluation of Each Nonwoven Fabric

### (1) Evaluation of Penetration Speed of Water

Onto each of the obtained hydrophilic nonwoven fabrics 1, 2 and a polyester nonwoven fabric (AXTAR G2260-1S BKO) which was not hydrophilized, one drop (about 20 mg) of deionized water was dropped with a dropper, and the time taken for the water droplets to completely penetrate into the nonwoven fabric was measured. The results are shown in Table 1.

**[Table 1]**

| nonwoven fabric | hydrophilic nonwoven fabric 1 | hydrophilic nonwoven fabric 2 | AXTAR G2260-1S BKO |
|---|---|---|---|
| time to penetration | 0.5 sec | 0.5 sec | 120 min |

### (2) Evaluation of Water-Holding Property

Each of hydrophilic nonwoven fabrics 1, 2 and the polyester nonwoven fabric (AXTAR G2260-1 S BKO) which was not hydrophilized was immersed in water for 30 seconds, and the weight before immersion and the weight after immersion were measured to thereby measure the amount of held water per unit area of the nonwoven fabric. The results are shown in Table 2.

**[Table 2]**

| nonwoven fabric | hydrophilic nonwoven fabric 1 | hydrophilic nonwoven fabric 2 | AXTAR G2260-1S BKO |
|---|---|---|---|
| amount of held water (g/m²) | 325 | 353 | 25 |

It is seen from Table 1 that hydrophilic nonwoven fabrics (nonwoven fabrics of hydrophilic fibers) 1, 2 exhibit a significantly faster penetration of water as compared with the polyester nonwoven fabric AXTAR G2260-1 S BKO which was not hydrophilized and thus had no hydrophilicity (nonwoven fabric of hydrophobic fibers). It is also seen from Table 2 that in the case of the nonwoven fabric AXTAR G2260-1 S BKO, the amount of held water is considerably smaller and a few air bubbles are released, while in the case of hydrophilic nonwoven fabrics 1, 2, respective amounts of held water are 13 times and 14 times as large as that of the nonwoven fabric AXTAR G2260-1 S BKO, and air bubbles are sufficiently released owing to water penetration.

### (3) Evaluation of Filtration Performance

Each nonwoven fabric was immersed in distilled water for one hour to let the fabric fit with water. After this, based on the natural filtration system, a filtration experiment was repeatedly performed with 2 L of Imari seawater at a time. The filtration flow rate (m³) was divided by the filtration area (m²) and the time (s) taken for filtration to thereby confirm the filtration flow velocity (average flow velocity). The results are shown in Table 3.

**[Table 3]**

| nonwoven fabric | hydrophilic nonwoven fabric 1 | hydrophilic nonwoven fabric 2 | AXTAR G2260-1S BKO |
|---|---|---|---|
| average flow velocity (10⁻⁴ m/s) | 4.24 | 5.44 | 1.97 |

It is confirmed from Table 3 that hydrophilic nonwoven fabrics 1, 2 can filtrate at respective filtration flow velocities of about 2.2 times and about 2.8 times as high as that of AXTAR G2260-1 S BKO. The reason why hydrophilic nonwoven fabrics 1, 2 can provide such a high filtration flow velocity is considered as the fact that sufficient flow passages are ensured as seen from the sufficiently released air bubbles from the nonwoven fabric as described above.

Next, in addition to the aforementioned nonwoven fabrics, the following nonwoven fabrics 3 to 6 were fabricated and the filtration performance was evaluated by a flat-sheet membrane filtration test.

### 1. Fabrication of Nonwoven Fabrics

### (Examples 3, 4)

Hydrophilic nonwoven fabrics 3, 4 were obtained by the same method as Example 2, except that the ratio of the acrylic block copolymer (PESRESIN A-647GEX) to the hydrophilized nonwoven fabric was set to 2.5% by mass (Example 3) and 1.25% by mass (Example 4) by changing the ratio in the mixture between polyester/acrylic block copolymer (PESRESIN A-647GEX), water, and carbodiimide cross-linking agent, when the hydrophilic resin was prepared.

### (Example 5)

In a solution made up of 5 parts by mass of polyethylene glycol diacrylate (manufactured by Shin-Nakamura Chemical Co., Ltd. under a trade name of NK Ester A-600), 40 parts by mass of diethylene glycol, and 55 parts by mass of water, 0.3 parts of a polymerization initiator (V-50 manufactured by Wako Pure Chemical Industries, Ltd.) was dissolved. In the obtained solution, a polyester nonwoven fabric (manufactured by Toray Industries, Inc. under a trade name of AXTAR G2260-1 S BKO) was immersed, thereafter dried at 120°C for 30 minutes, washed with water of 60°C for 20 minutes, and dried at 120°C to thereby obtain hydrophilic nonwoven fabric 5. The mass ratio of the acrylic polymer (NK Ester A-600) to the hydrophilized nonwoven fabric was 5% by mass.

### (Example 6)

Hydrophilic nonwoven fabric 6 was obtained by the same method as Example 5, except that the ratio of the polyethylene glycol diacrylate (manufactured by Shin-Nakamura Chemical Co., Ltd. under a trade name of NK Ester A-600) was set to 1.25% by mass, when the solution in which a polyester nonwoven fabric was to be immersed was prepared.

### 2. Flat-Sheet Membrane Filtration Test

The aforementioned nonwoven fabrics 2 to 6 were each used as a filtration membrane and a flat-sheet-type filtration unit was fabricated. Filtration units of the same configuration were fabricated except that AXTAR G2260-1 S BKO which was a non-hydrophilized polyester nonwoven fabric was used as a blank.

Each of the fabricated filtration units was used to filtrate seawater of Imari City at a flow velocity of 65 ml/min (effective membrane area: 11.34 cm²). Filtration was continued until the differential pressure reached 2 kPa and, when the differential pressure reached 2 kPa, backwashing was performed.

Filtration and backwashing were repeatedly performed, and the filtration performance was evaluated based on the time for which filtration could be continued. The results of evaluation are shown in Fig. 1.

Fig. 1 is a diagram showing a relation between the differential pressure (treatment water pressure) and the filtration time when filtration is performed using the aforementioned nonwoven fabrics 2 to 6 and AXTAR G2260-1S BKO as filtration membrane. In Fig. 1, the filtration units for which nonwoven fabrics 2 to 6 are used exhibit a slower increase of the differential pressure as compared with the filtration unit for which AXTAR G2260-1S BKO (existing membrane) is used, and a longer time taken before filtration becomes difficult, namely before the filtration flow rate is not recovered even backwashing is done, and thus filtration can be done for a longer time. From the above results, it is confirmed that a filtration unit for which a nonwoven fabric of hydrophilic fibers is used as a filtration membrane is used to accordingly improve the filtration lifetime.

While the present invention is described above based on the embodiments, the present invention is not limited to the foregoing embodiments. A variety of modifications can be made to the embodiments within the same or equivalent scope to the present invention.

## Claims

1. A filtration membrane for which a nonwoven fabric formed from synthetic fibers having hydrophilicity is used.

2. The filtration membrane according to claim 1, wherein the synthetic fibers having hydrophilicity are fibers produced by applying a hydrophilizing agent to respective surfaces of hydrophobic polyester fibers to make the fibers hydrophilic.

3. The filtration membrane according to claim 2, wherein the synthetic fibers having hydrophilicity are fibers produced by applying polyethylene glycol di(meta)acrylate and/or a block polymer of an acrylic polymer having saturated polyester and a hydrophilic group to respective surfaces of fibers of a polyester resin.

4. The filtration membrane according to claim 1, wherein the synthetic fibers having hydrophilicity are a copolymer produced by copolymerization of polyester and a compound having a hydrophilic group.

5. A filtration unit for which the filtration membrane as recited in any one of claims 1 to 4 is used.

6. A filtration system for seawater and/or freshwater, comprising the filtration unit as recited in claim 5, a water feeding apparatus feeding water-to-be-treated through the filtration unit, and a washing apparatus washing the filtration unit.

7. A filtration method for seawater and/or freshwater, using the filtration apparatus as recited in claim 6.
